# EUROPEAN PATENT SPECIFICATION

(11) **EP 4 466 690 B1**
(45) Date of publication and mention of the grant of the patent: **24.09.2025**
(21) Application number: 23700370.2
(22) Date of filing: 17.01.2023
(51) Int. Cl.: G09F 3/03, G09F 21/02, G09F 3/06, G06K 19/077

(54) **UHF SPORTS TIMING TAG ASSEMBLY**
UHF-SPORTZEITETIKETTANORDNUNG
ENSEMBLE ÉTIQUETTE DE CHRONOMÉTRAGE SPORTIF UHF

(30) Priority: 17.01.2022 NL 2030572
(43) Date of publication of application: 27.11.2024
(73) Proprietor: MyLaps B.V., 2012 PJ Haarlem (NL)
(72) Inventor: VERWOERD, Adriaan Klaas, 2012 PJ Haarlem (NL)
(74) Representative: De Vries & Metman
(86) International application number: PCT/NL2023/050014
(87) International publication number: WO 2023/136724

(56) References cited:
- EP-A1- 0 012 993
- EP-A2- 1 860 598
- GB-A- 869 393
- US-B2- 10 673 144

## Description

### TECHNICAL FIELD

The present disclosure relates to UHF sports timing, comprising a tag and a spacer attached or attachable to a support sheet such as a bib.

### BACKGROUND

Nowadays Ultra High Frequency (UHF) tags are commonly used in timing systems for large sports events e.g. mass sports events for running, cycling, or motorcycling. UHF tags are cheap, low weight, and can be read fast and from relatively large distances. A timing position, such as a starting line and/or a finish line, may be provided with an antenna mat that is capable of high frequency communication with the UHF tags that participants of the sports event wear, in particular wear on their chests.

When a tag comes within the radiation field of the antenna mat, the tag starts sending out ID messages as a result of activation by the radiation field. The antennas in the mat receive these messages and transfer the messages to a decoder (an analyser). The decoder is connected to the antenna mat and is programmed to determine the passage time of the tag with a unique ID on the basis of the signal strength of the received messages. Because the electromagnetic field produced by the antenna in the mat is strongest above the centre of the mat, it is possible to determine the point in time when the tag passes the antenna with reasonable accuracy.

Besides antenna mats also other antenna configurations may be used, e.g. a vertically-oriented antenna structure for a timing system such as disclosed in US 10,673,144.

The ultra-high frequency (UHF) tags use frequency in the UHF band between approximately 860 and 960 MHz. Typically the tag comprises a microchip combined with an antenna, and is structured to allow attachment to an object to be detected. In typical sports timing systems every participant is provided with a tag which is secured to a bib comprising an identifier such as a number, which is associated with the identity of the participant (e.g. one or more of name, address, team, etc.). The tags are attached to the bib so that there is an unambiguous one-to-one relation between the tag and the bib. The bib is worn and/or fixed to wearer's clothing such that the bib is located in front of the chest of the participant; another bib or part of the bib possibly also comprising an identifier may be located behind the back of the participant.

When fixing a UHF tag to a bib, certain problems occur. One problem relates to the fact that the tag is within close proximity of the body, which for the tag functions as a dielectric of relatively high dielectric constant. The proximity of the body changes the impedance of the tag antenna thereby "detuning" the tag away from its optimum working point. Due to this detuning effect, the tag may not be able to generate detectable modulated backscatter signal. The effect of detuning is further enhanced in a wet environment, e.g. wet and sweaty clothing and/or body of an athlete. This way, the signal may further deteriorate thereby increasing the risk that a participant crossing or passing a detection antenna is not or at least not correctly registered by the timing system.

In order to lift at least part of this problem, a spacer in the vicinity of the tag may be used such that at least a certain distance between the tag and the wet clothes and/or body is provided. Such spacer may have the form of a strip of lightweight foam attached to or in the vicinity of the tag. Ideally such spacer should guarantee a spacing distance of about 10 mm, however such thickness makes such tag bib assemblies not suitable for mass distribution (by post) and storage (e.g. millions or more). Therefore, in practice, spacers are used which are thinner than the desirable optimal thickness. Hence, conventional spacers thus allow only sub-optimal performance of the tag.

A further problem associated with the use of a tag bib assembly is that the tag signal may be influenced by nearby objects. Especially when a lot of participants are crossing an antenna simultaneously, the presence of other persons in the direct proximity of the radiated signal may cause that only a very small part of the signal will be picked up by the detection antenna of the timing system. Hence, when using a tag bib assembly, it is desired that the tag signal is directed towards the detection antenna.

WO 2013/068043 discloses a tag assembly wherein the tag assembly is affixable to clothing and/or a body and wherein the assembly comprises a support sheet, a tag disposed on the support sheet, the tag being configured to transmit a signal to a receiver, and an expandable spacer structure disposed the support sheet, the expandable spacer structure providing a predetermined spacing between the tag and the body, the expandable spacer being configured to expand from a thin non-expanded state to an expanded state of a predetermined spacer thickness.

US 10 673 144 B2 discloses an assembly as claimed in the preamble of claim 1.

Although the known spacers work satisfactory in principle, it has been found that expansion of an expandable spacer may be not as reliable as desired. Suitable expandable materials and/or foam of a foam spacer may get wet and then may itself affect the signal, and when the foam is dried up again the foam may become hardened and chafe the sporter's body and/or clothing.

Also, manufacturing costs of bibs comprising an expandable spacer are a concern. Therefore, further improvements to UHF sports timing systems are desired.

### SUMMARY

In view of the above, herewith are provided, in at least some aspects, a UHF sports timing bib tag assembly, a UHF sports timing tag assembly for such bib tag assembly, as set out below.

In an aspect, a UHF sports timing tag assembly is provided. The tag assembly comprises a tag and a spacer. The tag assembly may comprise the tag for being supported by a support sheet, such as a bib. The tag may comprise a dipole antenna and be configured to transmit a UHF signal to a receiver. The spacer may be configured to be attached to the support sheet for providing a predetermined spacing between the antenna of the tag and a body of a wearer along the antenna. The tag may be attached to the spacer and at least a portion of the spacer having a general U-shape having clamping members opposite each other providing an interstitial space for accommodating the support sheet and clamping onto the support sheet.

In an aspect a UHF sports timing bib tag assembly is provided. The UHF sports timing bib tag assembly comprises a support sheet, a tag supported by the support sheet, the tag being configured to transmit a UHF signal to a receiver, a spacer attachable or attached to the support sheet to provide, when attached, a predetermined spacing between the tag and a body of a wearer.

The tag and spacer may be provided as a UHF sports timing tag assembly disclosed herein.

In an aspect, a method comprises providing a bib and a UHF sports timing tag assembly as disclosed herein to a participant of a sports event, and providing from the bib and a UHF sports timing tag assembly the UHF sports timing bib tag assembly disclosed herein. The tag assembly may be re-used.

Further, with particular reference to any one or more of these aspects, the following is provided.

The support sheet may be a bib, which may comprise visual identifier, such as one or more of a number, a wearer's name, a team identifier such as a name and/or a symbol, etc. The visual identifier may be provided on a first side of the support sheet, e.g. being printed or formed otherwise. A second side, e.g. a reverse side of the sheet may differ from the first side.

The wearer may be a human or an animal such as a dog, a horse, a camel.

The spacer may be configured to clamp onto the support sheet for attachment of the spacer to the support sheet to provide the predetermined spacing between the tag and the body. This allows effective attachment of the spacer to the support sheet. Clamping may obviate attachment of the spacer to the support sheet by methods that one or more of time-consuming, permanent, non-correctable, requiring particular apparel, requiring modification of the support sheet and/or spacer, etc., such as gluing, welding, riveting, etc. Thus, attachment of the spacer to support sheet may easily be done by untrained persons and/or on-site at or near a reception and/or registration area of a sports event. Thus support sheets and spacers may be stored and/or transported separately which may simplify storage and/or handling, e.g. reducing volume of packaging and/or storing either part (support sheet and spacer) separately compared to volume of packaging and/or storing assemblies of support sheet with attached spacer.

The clamping may be or allow removable clamping, which simplifies one or more of packaging, storing, re-use, and recycling of the spacer and/or the support sheet separately.

The clamping may allow attachment in one direction but hinder removal in a reverse direction; e.g. one-way attachment in at least one direction. This hinders or prevents accidental or intentional detachment of the tag which may be associated with loss and/or false identification of the wearer (athlete). Removal in such case may be facilitated in a direction different from the direction of attachment, e.g. substantially perpendicular thereto.

Also or alternatively, the spacer may comprise for defining at least part of the spacing one or more protrusions and/or one or more tubular structures. Then, at least part of one or more spaces between at least some of the protrusions may be empty and/or filled with a low-dielectric material compared to at least part of the respective protrusion, and/or at least part of a lumen of the one or more tubular structures may be hollow and/or filled with a low-dielectric material compared to at least part of the respective tubular structure. The protrusions may preferably be spaced along the length and/or height of the tag in a direction away from the tag. This may facilitate positioning and/or orienting at least part of the tag with respect to the body. Also or alternatively, the one or more tubular portions may extend along at least part of the tag, preferably along the length of the tag. Thus, a low-dielectric material may be provided in the vicinity of the tag, which may improve operation of the assembly. The protrusions may be formed as the tubular structures. The protrusions and/or tubular portions may extend from a clamping member in a direction away from the interstitial space.

At least some of the one or more protrusions and/or one or more tubular structures may be rounded in at least one direction with a radius of more than 2 mm preferably in a range of 2 - 7 mm such as in a range of 3 - 5 mm, and/or provide a contact surface of the respective protrusion and/or tubular structure to the body of the person having a size in a range of 1 - 7 mm such as in a range 1 - 5 mm in length or height direction of the tag.

The tag may be disposed on the support sheet. However, it is preferred that the tag is attached to the spacer. Suitably, the tag may be disposed on and fixed to the spacer, e.g. being glued, welded, etc. Thus, relative position of the tag and spacer may be well defined, which may improve operation of the assembly.

The spacer may provide a support surface for supporting the tag, preferably for supporting the tag substantially over the entire length and/or height of at least an antenna of the tag, more preferably over the entire length and/or height of the tag. The support surface may be flat, which may facilitate attachment of the tag.

Also or alternatively, the support surface may be at least partly provided by a plurality of support structures providing a plurality of support surface portions for supporting the tag antenna spaced by one or more openings, e.g. one or more protrusions and/or tubular structures extending from a clamping member in a direction away from the interstitial space. This allows reducing an amount of material in close proximity to the tag antenna, thereby reducing the effective dielectric constant of the spacer and/or reducing a detuning effect thereof on the tag antenna. The plurality of support surface portions may preferably be flat and/or substantially coplanar. Preferably, the support surface is provided by three or more support surface portions accordingly separated by two or more openings, for further distributing support for the tag while reducing an amount of spacer material. The support structures may comprise plural ribs, preferably parallel to each other.

The spacer may comprise a structure for aligning at least part of the tag to at least part of the spacer, e.g. the spacer may comprise one or more of one or more protrusions, an edge, a rib and/or a recess for accommodating at least part of the tag. This may assist defining a relative position of the tag and spacer and this may protect at least part of the tag. Such recess for accommodating at least part of the tag may accommodate the entire tag so that it is recessed into part of the spacer as a whole.

The spacer may be configured to define a position and/or orientation of the tag with respect to an edge of the support sheet, in particular orienting at least part of the tag along the edge of the support sheet. This facilitates providing the tag with a predetermined position and/or orientation. In particular, sports regulations may determine a position of a bib on an athlete's body, in particular on the athlete's chest. Hence, the position and/or orientation of the tag when well determined with respect to the bib may be well determined with respect to the wearer and surroundings (notably horizontal and/or vertical directions), which may improve operation of the assembly and accurate interaction with an antenna.

E.g., the spacer may comprise a structure configured to align the tag with an edge of the support sheet, e.g. a structure configured to engage the edge of the support sheet. In particular at least part of the clamp may engage an edge of the support sheet; by an engagement, arranging the tag in a predetermined alignment is simplified by provision of a tactile reference.

Also or alternatively, the spacer may be configured to orient the tag in a more or less inclined orientation with respect to the vertical compared to a body posture of a normally competing athlete, e.g. a runner tends to assume a upright body posture whereas a skier tends to bend the torso forward, a forward/backward inclination of the tag relative to the body may accommodate such body posture (e.g. increased or decreased inclination), so that the tag orientation may conform to a desired (in particular optimum) coupling with a timing antenna field.

The spacer may have a general U-shape having clamping members opposite each other providing an interstitial space for accommodating the support sheet and clamping onto the support sheet. The U-shape provides an opening between the clamping members providing an entrance to the interstitial space and a back generally opposite the opening. The U-shape allows simple attachment of the spacer onto the support sheet. However, at least at portion of at least one of the clamping members may extend over an end of another one of the clamping members for closing off an entrance of the U-shape, which may be used to lock a portion of the support sheet into the interstitial space; this may assist preventing loss of the spacer from the support sheet.

The clamping members may be connected with a back portion. The back portion may form a resilient hinge, and/or comprise a hinge and a separate resilient member, to provide a clamping force to the clamping members; in particular, the back portion may form a continuous resilient portion unitary with at least one of the clamping members, preferably the clamping members opposite each other. The clamping members (and any back portion) may be formed unitary with each other, which may facilitate manufacturing; e.g. the U-shaped structure may be formed by extrusion techniques. The U-shape, and in particular a back portion thereof, may provide a structure configured to align the tag with an edge of the support sheet. The clamping members opposite each other may have substantially a same length in a direction perpendicular to the U-shape, which may be along a length direction of the spacer and/or of at least part of the tag (see below). Also or alternatively, the U-shape and/or any other portion of the spacer may be elongated at a constant shape in a direction perpendicular to the U-shape, which may facilitate manufacturing; e.g. the U-shaped structure may be formed by extrusion techniques. Such elongated U-shaped structure may provide significant clamping force at modest material consumption, e.g. an elongated thin-walled U-structure of a particular length in the direction of elongation (perpendicular to the U-shape) may provide a particular clamping force for which a much shorter structure of the same material and generally the same shape would require a much thicker walled U-structure.

In a spacer having such a general U-shape having clamping members, one clamping member of the U-shape may provide a support panel for supporting the tag, which may simplify construction of the spacer and reduce size and/or weight of the spacer. The at least one of the clamping members and the support panel for the tag may be integrated, in particular being unitary or being identical; e.g. the support panel comprising a support surface being formed by a surface of the clamping member. E.g., the clamping member may have an elongated shape corresponding to an elongated shape of the tag (e.g. associated with an elongated shape of an antenna of the tag) for attaching the tag onto the support surface. E.g. the clamping member or the U-shape may extend along a length of the tag, preferably at least along a length of the antenna of the tag, for supporting substantially all of (the antenna of) the tag.

A generally U-shaped structure also may provide resistance to bending and/or folding perpendicular to the direction of elongation. Hence, a tag disposed on such spacer may be protected against bending and/or folding which might damage the tag otherwise. E.g. the spacer may be substantially rigid, e.g. resisting bending and/or folding in normal use and operation by normally careful persons. Thus, the spacer may assist preventing bending and/or folding of the tag, in particular in case the tag is disposed on and/or integrated in the spacer.

In a spacer having an interstitial space as discussed above, the interstitial space may have one or more clamping portions for providing a locally elevated clamping force onto the support sheet. Such clamping portions may be provided by regions of locally reduced width and/or locally elevated friction coefficient. Preferably the interstitial space is provided with plural such clamping portions, increasing clamping force. As an option, the U-shape may have an opening and a back portion and one of the plural clamping portions is disposed closer to the opening than another one of the plural clamping portions. This may simplify introducing the support sheet; clamping force may translate into insertion friction for the support sheet when arranging the spacer onto the support sheet; portions of reduced friction compared to elevated friction may facilitate arranging an edge portion with respect portions of elevated friction, thus simplifying attachment.

The clamping members may define in at least part of the interstitial space a corrugating path for the support sheet from an entrance of the interstitial space. Thus, path length of the interstitial space may be increased compared to external size of the clamp, which may provide increased clamping force by one or more of elevated overall friction, deformation (bending) of the support sheet and reduced length of the clamping members from the back of the U-shaped portion. The corrugating path may be provided by corrugations of one or more of the clamping members. The corrugation and/or corrugations may comprise more or less smoothly curved portions; one or more of the corrugations may be symmetric or asymmetric, e.g. sinusoidal and/or triangular and/or sawtooth. For such corrugating path, at least part of at least one of the clamping members may be corrugated in a direction from an entrance to the back of the U-shape. The corrugations may extend along a longitudinal direction of the spacer

One or more of a width of at least part of the interstitial space, number and/or size and/or curvature of one or more corrugations of at least part of the interstitial space, number and/or size and/or shape of clamping portions, may be determined in accordance with one or more of thickness, compressibility, resiliency, flexibility, structural and/or surface properties (e.g. roughness, uniformity, etc.) of the support sheet.

E.g. at least part of the corrugating path may have a corrugation amplitude of more than two times a minimum width of the interstitial space at rest and /or more than two times a thickness of the support sheet onto which the spacer is to be clamped; a wavelength and/or amplitude of the corrugations may be determined associated with thickness and/or flexibility (and/or deformability such as resiliency) of the support sheet. The corrugation amplitude and/or wavelength may vary along the path, e.g. increasing along the path from the entrance towards the back. Note that too sharp protrusions may increase local pressure but effectively provide less holding force of the clamp onto the support sheet than gentler protrusions that allow more contact surface between (a clamping portion of) the corrugations.

In case of asymmetric corrugations, the asymmetry preferably provides a comparably gentle slope from the entrance towards the back and a steep slope from the back towards the entrance for facilitating insertion of the support sheet but preventing withdrawal.

Also or alternatively, in case the spacer has both a corrugating path and one or more clamping portion, at least one of the clamping portions for providing a locally elevated clamping force onto the support sheet may be arranged on a distal side of a corrugation providing at least part of the corrugating path as seen from the entrance.

In such latter cases, insertion of the support sheet into the interstitial space is facilitated but removal hindered or prevented.

For such corrugating path and/or one or more clamping portions, at least one of the clamping members may comprise one or more inward protrusions into the interstitial space, which may locally narrow the interstitial space. Such inward protrusion may be formed as a rib and it may be hollow and/or filled with a low-dielectric material compared to at least part of the respective protrusion. Part of a spacer that is hollow and/or filled with a low-dielectric material (e.g. air) may improve operation of the assembly by reducing amounts of high-dielectric material in the vicinity of the tag. Hence, in general, the spacer may comprise at least one tubular portion extending in an assembled configuration of the assembly, of the along at least part of the tag, preferably along the length of the tag, wherein the tubular portion may define a lumen that is hollow and/or is filled with a low-dielectric material compared to at least part of the tubular portion and/or other portions of the spacer.

The spacer may be configured to define a spacing in a range of 2 - 15 mm between the tag and the body, in particular a spacing in a range of 4 - 8 mm, such as in a range of 5 - 6 mm, e.g. the spacer may have, or define, a thickness in a range of 2 - 15 mm with respect to the tag, in particular a thickness in a range of 4 - 8 mm, such as in a range of 5 - 7 mm at a position of the tag.

At least part of the spacer may be a thin-walled structure. E.g. at least part of the spacer, in particular at least part of at least one of the clamping members has a wall having a wall thickness in a range of 0,1 - 2,0 mm, preferably in a range of 0,2 - 1,0 mm, such as in a range from 0,2 - 0,6 mm. Thus, the spacer may be light-weight. Low weight is preferred for burdening sporters as little as possible.

The spacer may be made of a water resistant and substantially non-water-absorbing material. At least part of the spacer may be, or at least be formed of, a solid material. This may reduce or prevent absorption of moisture into the spacer, thus preventing changing dielectric properties of the spacer. In particular, the spacer may generally be formed of a polymer material which may contain or be polyamide (e.g. nylon (PA6)) or a polyolefin such as polyethylene (PE) or polypropylene (PP). At least part of the spacer may be formed by moulding, e.g. injection moulding, and/or by extrusion, which are cost-effective manufacturing methods for large numbers of spacers.

The tag may be operative in the ultra-high frequency range. The tag may comprise at least one antenna structure which many be a metallic dipole antenna structure, the spacer may be located within the proximity of the antenna structure and/or at least partly on top (or below) of the antenna structure. The closer the proximity, the better the spacer may define a desired spacing. The tag may comprise a processor connected to a metallic thin-film antenna structure and the spacer may then be disposed at least partly over the tag.

The tag may comprise an antenna structure of the tag may be impedance matched (i.e. tuned) to a processor of the tag taking into account presence of a thin film dielectric layer of relatively high dielectric constant, e.g. between 10 and 50, which may optionally be arranged in the direct proximity of said antenna structure.

The presence of a dielectric layer may partially "screen" the proximity of the body. Such layer may have a thickness in a range of 0.05 - 5 mm. Such layer may comprise titanium dioxide.

Such dielectric layer may comprise multiple dielectric layers, for example a first dielectric layer of a relatively low dielectric constant (e.g. between 1 and 5) at an interface with the tag structure and a second dielectric layer of a relatively high dielectric constant (between 10-50) on top of the first thin-film dielectric layer at the interface with the spacer.

Such dielectric layers may be formed on the basis of a polymer comprising one or more dielectric fillers (e.g. titanium dioxide, silicon dioxide, aluminium dioxide, aluminosilicates, etc.) in order to form a dielectric layer of a desired dielectric constant. The dielectric constant of such layer may be controlled by controlling the composition and/or concentration of the dielectric fillers (mixture) in the polymer carrier layer.

The support sheet may comprise a visual identifier on a first side, in particular a printed identifier, e.g. being a bib, and the tag may be arranged on or in front of the first side. Thus, the tag may be not covered by the support sheet also or alternatively, a substantially closed U-shaped spacer may protect at least part of the support sheet accommodated within the interstitial space against fluids and may keep the part of the support sheet relatively dry. Either or both may improve operation in situations wherein the support sheet may get wet and/or is water absorbent. Also, it may simplify visual inspection of the tag, also from a distance.

The spacer may be arranged in part on or in front of the first side and in part on or behind a second side of the support sheet opposite the first side, e.g. the spacer comprising a U-shaped portion as set out above, and the tag may be supported on the spacer spaced from the first side of the support sheet. This facilitates spacing the tag both from the support sheet and from the body of the wearer and may improve operation.

The spacer may accommodate at least part of the support sheet overlapping the tag in a direction generally perpendicular to directions of largest size of the tag. This may provide a constant dielectric profile for (an antenna of) the tag, improving predictable operation of the assembly.

For improving operation of the assembly, at least a dielectric layer may be provided disposed between the tag and the spacer, wherein the dielectric layer comprises a high-dielectric material and wherein the antenna, e.g. a metallic thin-film antenna structure, is impedance matched to a processor of the tag taking into account the presence of the dielectric layer in the direct proximity of the antenna structure.

Associated with the preceding, a UHF sports timing tag assembly as provided herein may comprise a tag for being supported by a support sheet such as a bib, the tag comprising a dipole antenna and being configured to transmit a UHF signal to a receiver, a spacer configured to be attached to the bib for providing a predetermined spacing between the antenna of the tag and a body of a wearer, wherein the tag is attached to the spacer and at least a portion of the spacer having a general U-shape having clamping members opposite each other providing an interstitial space for accommodating the support sheet and clamping onto the support sheet.

In such UHF sports timing tag assembly one or more of the following may apply.

The tag may be elongated having a length and a height and wherein then the spacer may be configured to define the spacing along the length of the tag in a range of 2 - 15 mm, in particular in a range of 4 - 8 mm, such as in a range of 5 - 6 mm,

The tag may be elongated having a length and a height and wherein then the spacer may have or may define a thickness in a range of 2 - 15 mm at a position of the tag, in particular a thickness in a range of 4 - 8 mm, such as in a range of 5 - 6 mm along the length of the tag.

The tag may be elongated having a length and a height and the spacer may have a length of more than 5 times the height, preferably being in a range of 5-20 times the height.

At least one of the clamping members may provide a support surface for supporting the tag, and the tag may then be disposed on the support surface.

The clamping members may define in at least part of the interstitial space a corrugating path for the support sheet from an entrance of the interstitial space. The assembly may then comprise clamping portions for providing a locally elevated clamping force onto a support sheet arranged on a distal side of a corrugation providing at least part of the corrugating path from the entrance.

The spacer may comprise at least one tubular portion extending along at least part of the tag, preferably along the length of the tag.

The spacer may be substantially a polymer extrusion product, e.g. of polyamide or polyethene.

At least part of the spacer, in particular at least part of at least one of the clamping members, if present, may have a wall having a wall thickness in a range of 0,1 - 2,0 mm, preferably in a range of 0,2 - 1,0 mm, such as in a range from 0,2 - 0,6 mm.

The tag may comprise at least one metallic dipole antenna structure and the spacer maybe located within the proximity of the antenna structure and/or at least partly on top of the dipole antenna structure; and/or the tag may be operative in the ultra-high frequency range.

The tag may comprise a processor connected to a metallic thin-film antenna structure and the spacer may be disposed at least partly over the tag.

At least a dielectric layer may be disposed between the tag and the spacer, wherein the dielectric layer may comprise a high-dielectric material, the metallic thin-film antenna structure being impedance matched to the processor taking into account the presence of the dielectric layer in the direct proximity of the antenna structure.

A UHF bib tag assembly may comprise such UHF sports timing tag assembly, and it may comprise a support sheet comprising a visual identifier on a first side, in particular a printed identifier, wherein the spacer may be attachable or attached to the support sheet, such that the tag is arranged on or in front of the first side.

In the bib tag assembly, the spacer may be arranged in part on or in front of the first side and in part on or behind a second side of the support sheet opposite the first side.

According to one or more of the present concepts, a UHF sports timing bib tag assembly may also or alternatively comprise a support sheet, such as a bib, to be attached to a body or clothing of a wearer, in particular an athlete, and a UHF tag comprising a thin-film dipole antenna arranged on a surface of an elongated clamping structure for removably attaching the UHF tag to an edge of the support sheet. The elongated clamping structure may include a first clamping member and an opposing second clamping member, the first clamping member and second clamping member forming an interstitial space for accommodating the support sheet. An outer surface of the first clamping member may form the surface on which the UHF tag is arranged. The second clamping member may include one or more spacer structures arranged along the elongated clamping structure so that, when in use, the one or more spacer structures are located between the body of the athlete and the UHF tag comprising a thin-film dipole antenna.

Then the one or more spacer structures may be arranged along a longitudinal axis of the elongated clamping structure.

The second clamping member including one or more spacer structures may be formed as an (extruded) corrugated sheet, preferably the corrugated sheet including one or more elongated corrugations along the longitudinal axis of the of the elongated clamping structure.

A cross-sectional depth of the elongated corrugations may define a spacing distance between the body of the athlete and the UHF tag.

The first clamping member may include a first set of elongated corrugations and the second clamping member may include a second set of elongated corrugations opposing the first set of elongated corrugations.

### BRIEF DESCRIPTION OF THE DRAWINGS

The above-described aspects will hereafter be more explained with further details and benefits with reference to the drawings showing a number of embodiments by way of example.
**Figs. 1A-1B** schematically show a UHF bib tag assembly;
**Fig. 2A-2C** depict a timing system for use with an embodiment of a bib tag assembly;
**Figs. 3A-3B** indicate a tag assembly for the bib tag assembly; **Fig. 3C** shows the spacer of the tag assembly;
**Fig. 4** shows two spacers for a tag assembly for a bib tag assembly as provided herein;
**Figs. 5A-5C** show attachment and detachment of a tag assembly onto/from a support sheet;
**Fig. 6** shows an alternative embodiment of a UHF bib tag assembly as provided herein;
**Fig. 7A** indicates another embodiment of a bib tag assembly; **Fig. 7B** shows the spacer of the tag assembly in side view;
**Fig. 8** shows a spacer for a tag assembly for a bib tag assembly as provided herein.

### DETAILED DESCRIPTION OF EMBODIMENTS

It is noted that the drawings are schematic, not necessarily to scale and that details that are not required for understanding the present invention may have been omitted. The terms "upward", "downward", "below", "above", and the like relate to the embodiments as oriented in the drawings, unless otherwise specified. Further, elements that are at least substantially identical or that perform an at least substantially identical function are denoted by the same numeral, where helpful individualised with alphabetic suffixes.

Further, unless otherwise specified, terms like "detachable" and "removably connected" are intended to mean that respective parts may be disconnected essentially without damage or destruction of either part, e.g. excluding structures in which the parts are integral (e.g. welded or moulded as one piece), but including structures in which parts are attached by or as mated connectors, fasteners, releasable self-fastening features, etc. The verb "to facilitate" is intended to mean "to make easier and/or less complicated" rather than "to enable".

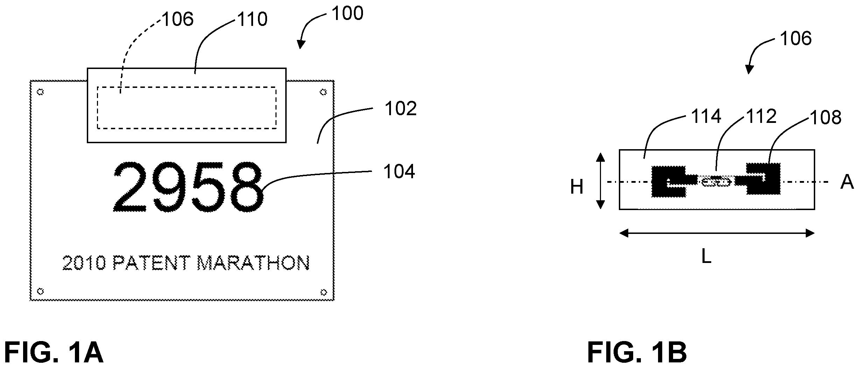

**Fig. 1A-1B** schematically show an embodiment of a UHF bib tag assembly **100,** comprising a support sheet **102** provided with an identifier **104** for use as a bib. A UHF tag **106** is supported by the support sheet. A spacer **110** is attached to the support sheet for providing a predetermined spacing between the tag **106** and a body of a wearer, see below. The UHF tag **106** and spacer **110** together form a UFH tag assembly **101** for use with the support sheet / bib **102** to form the UHF bib tag assembly **100.**

The shown support sheet **102** is a bib for use e.g. in a sports event, the support sheet being a flexible, light-weight, water-resistant, sheet-like material that is adapted to be affixed to a person through the use of an adhesive or mechanism to pin or tie the support sheet to the wearer (or clothing on the wearer). The wearer may be a human or an animal. Exemplary materials used for support sheets include fabric, paper, woven sheet, plastic or any combination thereof. Preferably, a front side of the support sheet may display an identifier such as an identifier **104** identifying the wearer to which the support sheet is affixed. Support sheet **102** may have a rectangular, 4-sided shape, but in other embodiments it may have any suitable shape, e.g., shape of a logo.

The tag **106** is configured to transmit a UHF signal to a receiver. In particular, in order to make the tag suitable for a sports timing system, the tag **106** may comprise an antenna **108** for receiving and transmitting signals. The tag may be a UHF tag operating in the UHF frequency range. In more general, the tag may be configured to operate in the frequency range between 800 and 1000 MHz. E.g. the tag may operate in a frequency range between 860 and 960 MHz, and/or the tag may operate in a frequency range between 900 and 930 MHz. In another embodiment, the tag may operate in a frequency range between 940 and 970 Mhz. The antenna **108** associated with the tag may have a predetermined shape. The antenna **108** may be a metallic (flexible) thin-film layer. The tag **106** may further comprise a support **114,** e.g. one or more dielectric layers which may enclose and protect the antenna **108** and chip **112** e.g. against contact and/or moisture.

E.g., the tag structure may include a processor such as an integrated circuit (IC) for receiving, processing, and transmitting UHF signals and a metallic thin-film antenna structure **108,** which is provided onto a support **114** that may be flexible. The processor and the metallic thin-film antenna structure may be covered with a passivation layer (not shown), e.g. a thin-film insulating layer. The backside of the support sheet may comprise an adhesive such that the tag structure may be attached as a sticker to the spacer, or in other embodiments to the bib; the spacer may provide the desired spacing between a tag attached on the support sheet and the wearer's body. However, it is preferred that the tag be attached to the spacer instead of to the bib, more in particular that the tag and spacer are together re-usable separately from the support sheet, e.g. as a personal tag for a user to be used in multiple events. For that, the tag assembly **101** comprising the tag **106** and the spacer **110** may be removably attached to the bib **102.**

In one embodiment as indicated in **Fig. 1B****,** the antenna **108** may have the form of a dipole antenna along an axis **A.** The antenna **108** may have a length of approximately half the wavelength of the operation frequency, e.g. between 10-20 cm (900 MHz equals approximately 16 cm). The tag may further comprise a processor **112,** i.e. an RFID-specific processor, for processing signals received by the tag. The tag **106** may further comprise a support **114,** e.g. one or more dielectric layers which may enclose and protect the antenna **108** and processor **112** e.g. against contact and/or moisture. The shape of the tag **106** may largely correspond to that of the antenna **108;** the tag **106** may be elongated e.g. having a length **L** and a height **H** in a direction perpendicular to the length **L.** Here the tag **106** is shown rectangular but other shapes may be provided.

Tag **108** may be securely attached to support sheet **102.**

The spacer **110** (see below) is attached to the support sheet for providing a predetermined spacing between at least the antenna **108** of the tag **106** and a body of a wearer. The spacing may preferably be between approximately 5 and 15 mm. For an UHF tag in use, the spacer may have a thickness in a range of 5 - 10 mm. The spacer provides a desired distance between the tag and the, possibly wet, shirt and/or body such that the negative influence of the (wet) shirt and/or body are considerably reduced.

The position and orientation of a bib **100** on a wearer's body is generally precisely regulated and/or determined by a sports event organiser; usually on an athlete's chest and substantially horizontal (identifier **104** clearly visible and standing upright). In **Fig. 1A** is shown that, thus arranged, the tag **106** may be attached to the bib **100** such that its antenna structure **108,** e.g. its longitudinal axis **A,** is substantially parallel to the ground surface. In this configuration, the tag signal may be picked up by a detection antenna, which is located on the ground (e.g. by use of an antenna mat) or above the athlete to be detected (see below). Alternatively, not shown, the tag/antenna structure and the associated spacer structure **110** may be attached to the bib such that its longitudinal axis A is perpendicular to the ground surface. In that configuration, the tag signal may be picked up by a detection antenna, which is located on at least one side of the athlete's path of travel.

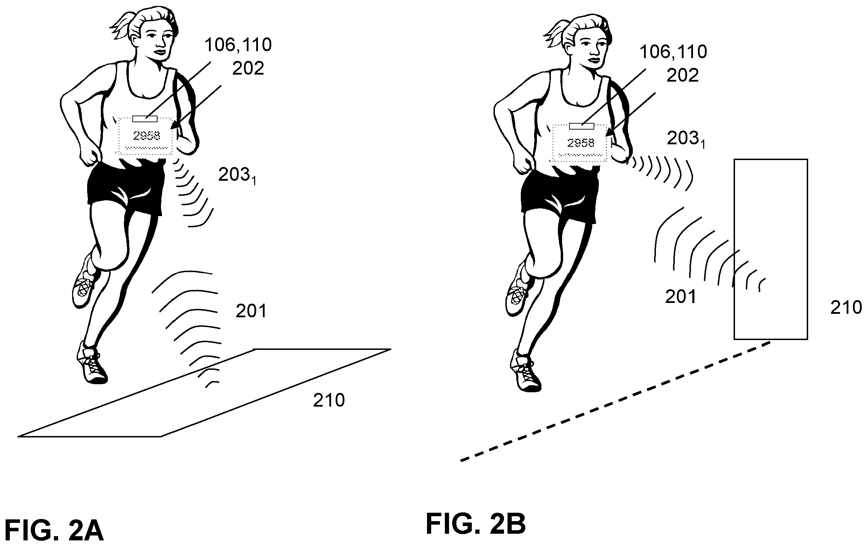

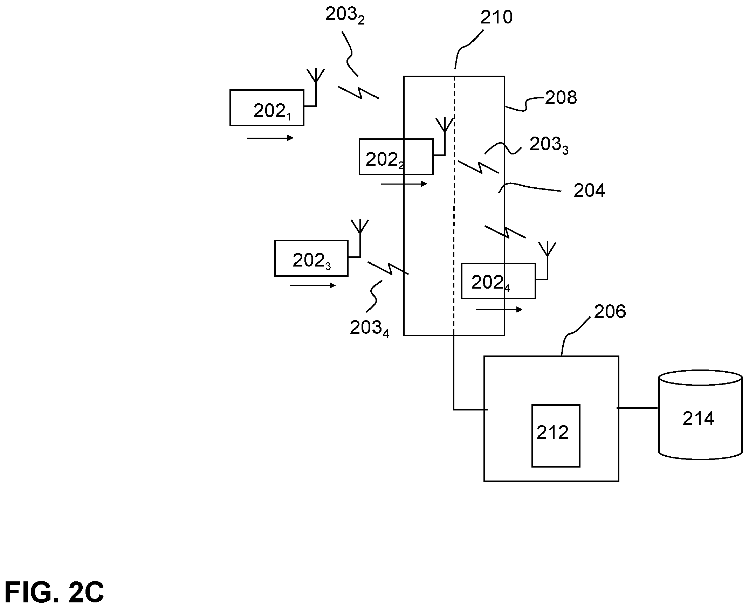

**Fig. 2A-2C** depict a timing system for use with a bib tag assembly **202** according to various embodiments of the invention. In particular, **Fig. 2C** depicts a schematic of a top-view of a timing system, which may comprise a detection antenna **208** connected to a decoder **206.** In one embodiment, the detection antenna may be configured as an elongated antenna mat placed on the ground, in the path of travel of the athletes, wherein the antenna mat may comprise one or more antennas configured to pick up signals transmitted by the bib-tag assembly.

In another embodiment (not shown in **Fig. 2C****),** a detection antenna may be located at the side or above the path of travel of the athletes. Depending on the application different antenna implementations e.g. a patch antenna, a slot antenna or a Yagi antenna, may be used.

In one embodiment, the tag may be configured as a passive backscatter system wherein the tag transmits a modulated signal **204** to the detection antenna. If a participant wearing a bib tag assembly **202₁₋₄** comprising a tag **106** and spacer **110,** comes in the vicinity of the detection antenna, the respective tag antenna may receive the modulated signal **201,** which is used to power-up the processor in the tag.

**Fig. 2A** depicts e.g. an implementation wherein a detection antenna mat **210** transmits a modulated signal **201** in a direction opposite to the direction in which the athlete wearing the bib tag is moving. **Fig. 2B** depicts a detection antenna **210** located at a side of the athlete's path of travel wherein the detection antenna transmits a modulated signal towards on side of the athlete wearing a bib tag.

In response, the tag transmits information stored in the processor back to the detection antenna on the basis of a modulating back-scattered signal **203₁**. This way, the tag may start sending out messages **203₁₋₄** comprising at least a unique ID identifying the bib (and therewith the wearer). The detection antenna may pick up the transmitted messages and transfer them to the decoder, which comprises a processor for executing an algorithm **212** for determining the (split) time associated with the tag on the basis of time of detection and the signal strength of the received ID messages. The processed data may be subsequently stored in a storage **214,** e.g. a database, for further use.

As the electro-magnetical field produced by the antennas in the antenna mat is strongest above the (longitudinal) centre-line **210** of the antenna, the decoder algorithm may determine the exact passing of a tag above the centre-line of the antenna mat. Determination of the time that the tag passes the centre-line requires measuring the signal strength of multiple messages originating from a tag. It is therefore very important that optimal signal transfer between the tag and the antenna mat is achieved. This may be achieved by bib tag assembly comprising a spacer as provided herein.

As stated before, the spacer **110** is attached to the support sheet **102** for providing a predetermined spacing between at least the antenna **108** of the tag **108** and a body of a wearer.

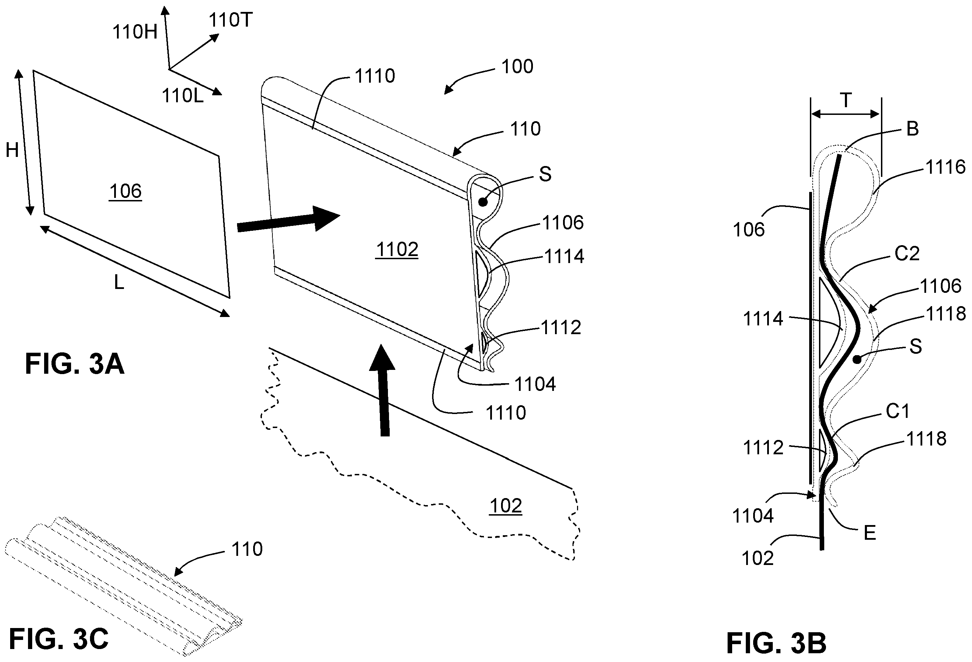

**Figs. 3A-3B** show an exemplary embodiment of a bib tag assembly **100** in exploded view **(****Fig. 3A****)** and in assembled side view **(****Fig. 3B). Fig. 3C** is a rear perspective view of the spacer **110.**

The tag **106** is attached to a support surface **1102** of spacer **110,** e.g. glued. The spacer **110** is to be attached to the support sheet **102**; the spacer **110** is configured to clamp onto the support sheet for attachment of the spacer to the support sheet **102.** The spacer **110** has a general U-shape having clamping members **1104, 1106** opposite each other providing an interstitial space S for accommodating, and clamping onto, the support sheet **102.**

The spacer **110** has a thickness **T** in a thickness direction **110T** perpendicular to its length direction **110L** and height direction **110H** associated with the length **L** and height **H** of the tag **106** (see coordinates in **Fig 3A****).** The thickness defines a minimum for a spacing **D** between the tag **106** and a body of a wearer (not shown), spanning over the support sheet **102** accommodated within the spacer **110.** The tag **106** is arranged in front of the support sheet **102,** on an opposite side of the wearer's body. The shape of the spacer may determine an inclination of (the antenna **108** of) the tag **106** with respect to the wearer's body, e.g. substantially parallel as here. The thickness of the spacer may be selected such that the spacer has a thickness of about 10 mm, i.e. a spacer thickness which allows good coupling between the tag backscatter signal and the detection antenna in the UHF frequency range.

In **Figs. 3A, 3B** is visible that part of one of the clamping members **1104** is formed as a support panel providing the support surface **1102** for supporting the tag **106.** The support surface is recessed into the panel, providing edges **1110** for aligning the tag **106** to the spacer **110** and protecting (sides of) the tag **106.**

Best seen in **Fig. 3B****,** the clamping members **1104, 1106** define in the interstitial space **S** a corrugating path for the support sheet **102** from an entrance **E** of the interstitial space **S** to a back **B** of the U-shape of the spacer **110.** As an option, one of the clamping members **1106** has overall a corrugated shape, providing ribs **1116, 118** on a rear side of the spacer (the tag **106** is in front). The other one of the clamping members **1104** comprises inward protrusions in the form of ribs **1112, 1114,** defining part of the corrugating path. The ribs **1112, 1114** both are tubular and hollow, as an option, but one or both ribs may be solid or filled with another material than a remainder of the respective rib or the spacer as a whole. Note that the second rib **1114** is larger than the first rib **1112** providing a larger corrugation amplitude (deflection from a straight path for the support sheet **102)** and a larger wavelength along the path; hence, friction coefficients and clamping force of the clamp may be accurately determined. Also more or less and/or differently shaped ribs may be provided.

At least the back **B** of the spacer **110** is resilient, e.g. defined by one or more of material properties, wall thickness, shape (e.g. size and/or curvature of rib **1116),** to provide the clamping force to the clamping members **1104, 1106.**

Best seen about the second rib **1112** from the entrance **E** is that the spacer is provided with plural (here: two) spaced apart clamping portions **C1, C2** for providing a locally elevated clamping force onto the support sheet **102.** The clamping portions **C1, C2** are arranged on a distal side of the respective corrugation (here ribs **1112, 1114)** as seen from the entrance; on the proximal sides of the respective corrugations (ribs **1112, 1114)** the interstitial space **S** is relatively wide, wider than a thickness of the support sheet **102** and at the distal side the interstitial space **S** is relatively narrow. Note that the second rib **1114** is larger than the first rib **1112** providing a larger corrugation amplitude (deflection from a straight path for the support sheet **102)** and a larger wavelength along the path; this may be used for controlling friction coefficients for insertion and/or (preventing) withdrawal and/or for controlling clamping force of (a clamping portion of) the clamp, e.g. with respect length of the clamping member(s) from the back **B** which defines an arm for the clamping force ("arm" here being understood as physical concept rather than as discrete structure).

Best seen from **Figs. 3B, 3C** due to the corrugated shape of clamping member **1106,** the spacer **110** is provided with rearward protrusions here in the form of ribs **1116, 1118,** i.e. extending away from the tag **106** defining at least part of the spacing **D.** Due to such protrusions, only small contact surface is provided for contact with the wearer's body, which may provide ventilation and/or reduce or prevent hinder from the spacer **110.** The shape of the spacer may also determine an inclination of (the antenna **108** of) the tag **106** with respect to the wearer's body, e.g. substantially parallel as here.

The back **B** of the spacer **110** may be abutted by an edge of the support sheet **102,** this may facilitate alignment of the spacer to the edge and hence of (an antenna of) the tag to the edge for alignment to ((a polarization of) a signal of) a detection antenna.

The shown spacer **110** may readily be formed by extrusion techniques so that it may be provided in any suitable length (along **110L)** and have constant shape along the length; thus mechanical and dielectric properties may be constant along the tag **106.** Also, the length of the spacer **110** may simplify alignment to an edge of the support sheet **102.**

As sown above, the tag may be attached to the spacer. A least part of the material of the spacer may be selected for its dielectric properties. Also, one or more dielectric layers may be provided between the tag and the spacer. The antenna structure of the tag may be impedance matched (i.e. tuned) to the tag processor taking into account the presence of the dielectric material in the direct proximity of said antenna structure. E.g. a thin film dielectric layer of relatively high dielectric constant e.g. between 10 and 50 in the direct proximity of said antenna structure may partially "screen" the proximity of the body. In one embodiment, such layer may have a thickness of between 0.05 and 5 mm. In another embodiment the layer may comprise titanium dioxide. The layer may be formed of a polymer comprising titanium dioxide particles as a filler in order to increase the dielectric constant of the layer to a desired value.

In further embodiments (not shown), a dielectric layer in between the tag and a wearer's body, e.g. between the tag and the spacer, may comprise multiple dielectric layers, for example a first dielectric layer of a relatively low dielectric constant (e.g. between 1 and 5) at the interface with the tag structure and a second dielectric layer of a relatively high dielectric constant (between 10-50) on top of the first thin-film dielectric layer at the interface with the spacer layer.

In one embodiment, the dielectric layers may be formed on the basis of a polymer comprising one or more dielectric fillers (e.g. titanium dioxide, silicon dioxide, aluminium dioxide, aluminosilicates, etc.) in order to form a dielectric layer of a desired dielectric constant. The dielectric constant of such layer may be controlled by controlling the composition and/or concentration of the dielectric fillers (mixture) in the polymer carrier layer.

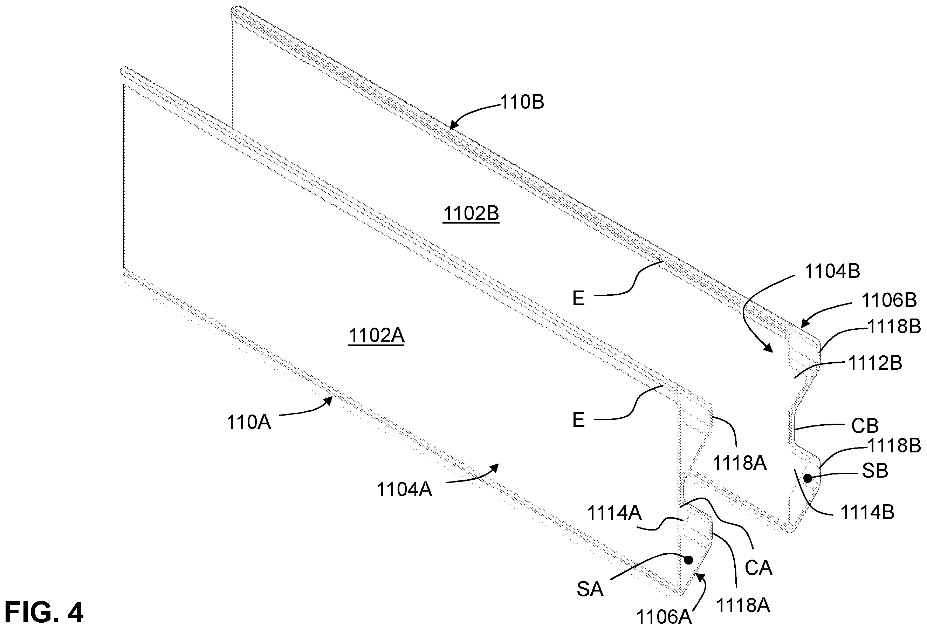

**Fig. 4** shows two alternative embodiments **110A, 110B** of a spacer, both being generally U-shaped for clamping onto a support sheet. Both spacers **110A, 110B** having constant shape along their respective length, and having a generally plane support surface **1102A, 1102B** for a tag (not shown) on a front side and ribs **1118A, 1118B** on a rear side. In one shown embodiment a single protrusion **1114A** extends from one clamping member **1104A** into the interstitial space **SA, SB,** the other shown embodiment comprises two protrusions **1112B, 1114B** from front clamping member **1104B.** Both protrusions are, as an option, solid. Different from the embodiment of **Fig. 3A-3C****,** here the ribs / corrugations **1118A, 1118B** of the respective rear clamping member **1106A, 1106B** are somewhat angular rather than smoothly curved. This may facilitate positioning and/or distributing dielectric material with respect to the antenna of the tag.

Also, in both shown embodiments the end of the respective rear clamping member extends over the end of the front clamping member therewith allowing locking support sheet material in the respective interstitial spaces.

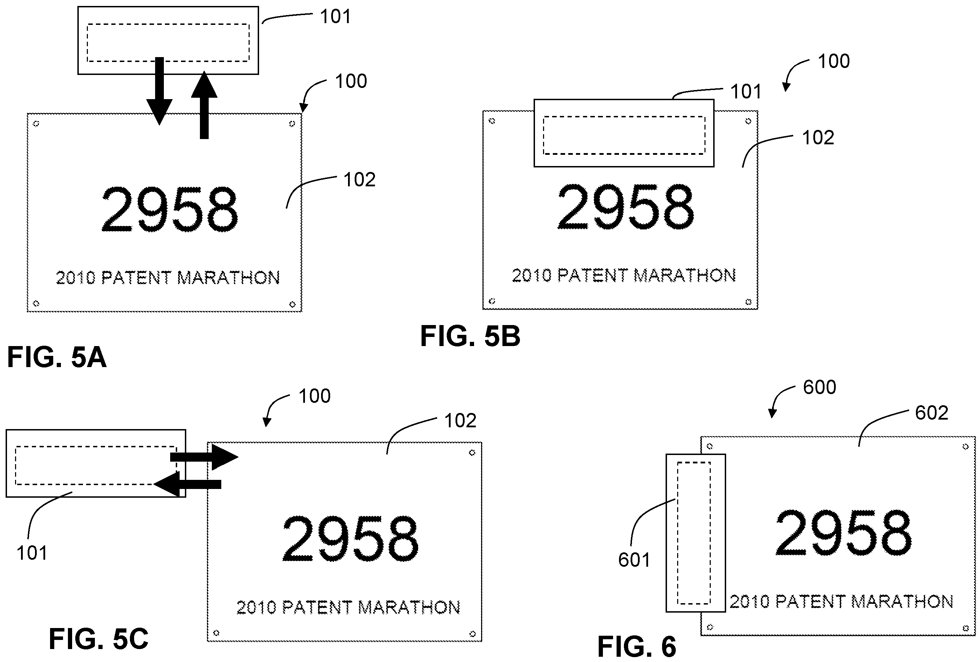

**Figs. 5A-5C** show attachment and detachment of a UFH tag assembly **101** comprising a tag and a spacer onto a support sheet / bib **102** to form UHF bib tag timing assembly **100.** **Fig. 5A** shows providing a tag assembly **101** as provided herein, comprising a UHF tag **106** supported on a spacer **110** and a support sheet **102.** For assembly, the support sheet **102** may be entered into the interstitial space of the spacer in one direction for attachment (arrows), providing the assembled UHF bib tag assembly **100 (****Fig. 5B****).** Then, the tag assembly **101** comprising the tag **106** and spacer **110** is attached to the support sheet **102** for use and they should not inadvertently become separated. Removal along the same direction (arrows in **Fig. 5A****)** may therefore require significant force, due to the clamping. However, the tag assembly **101** comprising the tag **106** and spacer **110** may be detached from the support sheet **102** comparably easily by pulling the parts **101, 102** apart in a perpendicular direction, along the direction of elongation **L** of the spacer **110.** Then, the tag assembly **101** and/or the support sheet **102** may be re-used or recycled separately.

**Fig. 6** shows a UHS bib tag assembly **600** comprising a tag assembly **601** attached to a bib **602,** wherein the tag assembly comprises a tag **606** and a spacer **610** according to the principles laid out herein. In this bib tag assembly **600** (the antenna of) the tag **606** is aligned generally vertically along a vertical edge of the bib **602.** Such embodiment is e.g. particularly useful when a signal from a detection antenna is vertically polarised.

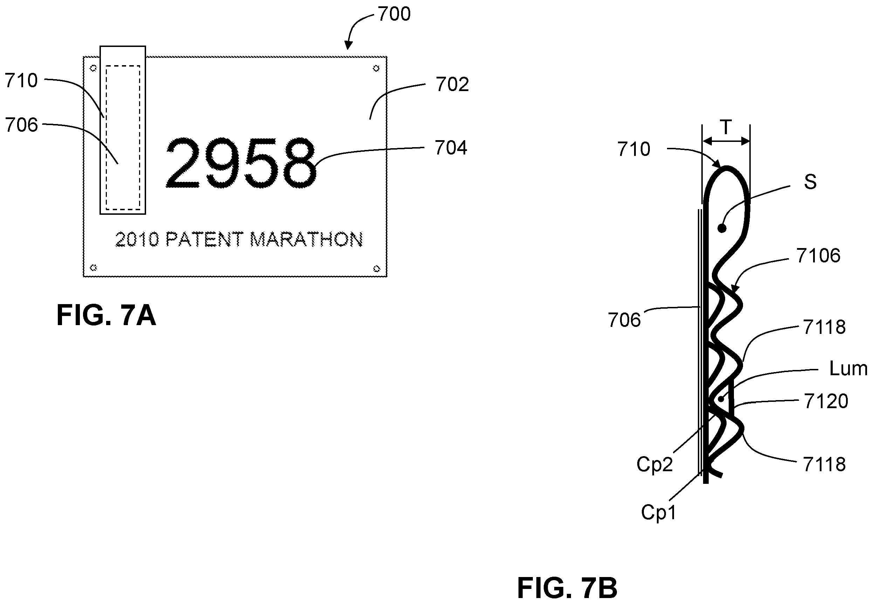

**Figs. 7A, 7B** show another embodiment **700** of a UHS bib tag assembly comprising a tag assembly **701,** comprising a tag **706** and a spacer **710** attached to a bib **702,** provided with optional wearer identifier **704.** In this embodiment the spacer again has a general U-shape but compared to the previously shown embodiments, the aspect ratio length : width is inverted and the tag **706** is arranged with its length direction **L** perpendicular to the direction of extension of the back **B** of the spacer instead of along the back. **Fig. 7B** is, similar to **Fig. 3B****,** a side view of the spacer **710.** The spacer **710** comprises corrugations, however in view of its length the clamp comprises more corrugations. Also, an optional bridge **7120** is arranged between two corrugations **7118 /** ribs **7120,** so that clamping force(s) for a most proximal clamping portion **Cp1** or two a most proximal clamping portions **Cp1, Cp2** is (are) increased by fortifying part of a clamping member **7106.** The bridge is, as an option recessed behind the apices of the ribs **7118** to reduce contact surface with a wearer's body. Such bridge may, as shown, provide a tubular portion defining a lumen **Lum.** More or less such bridges may be provided. Apices of the back and/or ribs **7118** determine a thickness **T** of the spacer and may determine an inclination of (the antenna of) the tag **706** with respect to the wearer's body, e.g. substantially parallel as shown here; optionally three or more ribs **7118** may define a common plane. Also, further protrusions, possibly also defining the common plane, may be provided to determine such inclination.

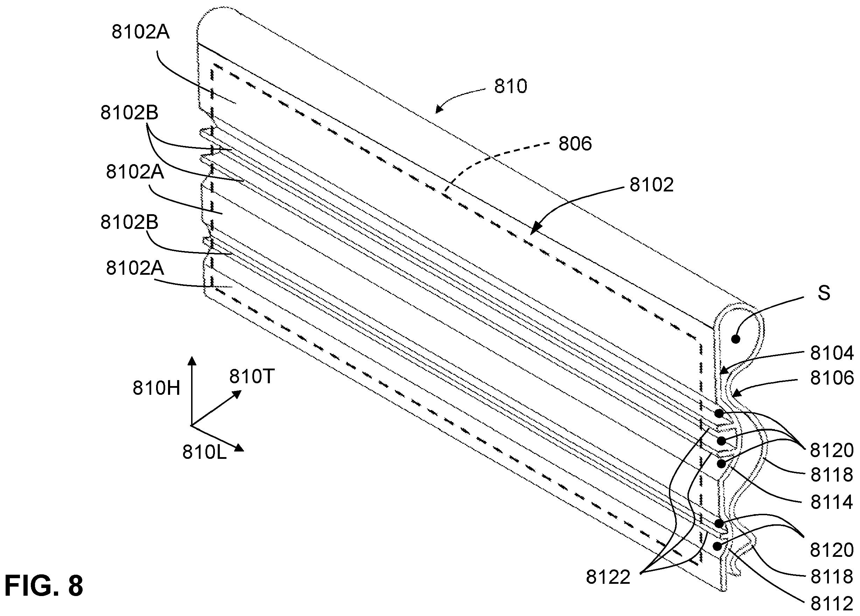

**Fig. 8** shows another embodiment of a spacer **810** for use in the UHF bib tag assembly provided herein. The spacer **810** is generally U-shaped providing opposite clamping members **8104, 8106.** As before, the clamping members **8104, 8106** are corrugated, providing ribs **8118** on a rear side of the spacer **810.** The spacer **810** has a constant shape along its respective length. The spacer **810** provides a support surface **8102** for a tag **806** (shown schematically with dashed lines). The support surface **8102** is provided by a plurality of substantially coplanar surface portions, here provided by first surface portions **8102A,** and second surface portions **8102B** spaced from each other by openings **8120.** As options, the first and second surface portions **8102A, 8102B** are provided by surface portions of (corrugation ribs **8112, 8114** of) the clamping member **8104** and a plurality of protrusions in the form of ribs **8122.** The ribs **8122** are arranged along the length direction **810L** of the spacer and are spaced along a height of the spacer **810** (height or height direction **810H).** The openings **8120** between the ribs may be wider than a height of the ribs **8122** in height direction **810H.** The ribs **8122** extend from the clamping member **8104** in a thickness direction **810T** away from the interstitial space **S.** Here, the protrusions **8122** are arranged in recesses formed by corrugation ribs **8112, 8114** of a clamping member **8104** of the spacer. As shown options, the ribs **8122** have protruding length from the clamping member **8104** (normal to the support surface **8102** / in thickness direction **810T)** larger than a height transverse to their protruding length (in height direction **810H)** so that the ribs **8122** are comparably thin. The ribs **8122** serve as support ribs supporting the tag **806** on the support surface **8102** against deformation, in particular in direction normal to the support surface **8102.** The ribs **8122** further provide adhesion surface for fixing the tag **806,** while leaving empty spaces between the support structures **8104, 8122.** Thus, the ribs **8122** separate the tag from the clamping member **8104** and reduce an amount of spacer material close to the support surface and a tag supported thereon. Such embodiment allowing for a reduction of spacer material, reduces an effective dielectric constant of the spacer **810,** in close proximity to a tag (antenna) on the support surface **8102.** Thus a detuning effect of the spacer on the tag may be reduced.

As visible in **Figs. 3A. 3B****;** **4****,** **7B** and **8** an amplitude of the corrugations may be such that at least two corrugations / ribs **(118, 1118A, 1118B, 7118)** provide the spacer with substantially equal thickness **T.**

The disclosure is not restricted to the above-described embodiments which can be varied in a number of ways within the scope of the claims.

## Claims

1. A UHF sports timing bib tag assembly (100, 600, 700) comprising:
a support sheet (102, 602, 702), such as a bib, to be attached to a body or clothing of a wearer, preferably comprising an identifier,
a tag (106, 706, 806) for being supported by the support sheet, the tag comprising a dipole antenna (108) and being configured to transmit a UHF signal (203) to a receiver (210), **characterized by**
a spacer (110, 710, 810) configured to be attached to the support sheet and having or defining a thickness (T) for providing a predetermined spacing between the antenna of the tag and a body of the wearer along the antenna,
wherein the tag is attached to the spacer and
wherein at least a portion of the spacer has a general U-shape having clamping members (1104, 1106, 7104, 7106, 8104, 8106) opposite each other providing an interstitial space (S, SA, SB) for accommodating the support sheet (102, 602, 702) and clamping onto the support sheet.

2. The tag assembly (100, 600, 700) according to any preceding claim, wherein the tag (106, 706, 806) is elongated having a length (L) and a height (H) and wherein the spacing along the length of the tag is in a range of 2 - 15 mm, in particular in a range of 4 - 8 mm, such as in a range of 5 - 6 mm; and/or
wherein the tag is elongated having a length (L) and a height (H) and wherein the spacer has or defines a thickness (T) in a range of 2 - 15 mm at a position of the tag, in particular a thickness in a range of 4 - 8 mm, such as in a range of 5 - 6 mm along the length of the tag.

3. The tag assembly (100, 600, 700) according to any preceding claim, wherein at least one of the clamping members (1104, 1106, 7104, 7106, 8104, 8106) provides a support surface (1102, 1102A, 1102B, 8102) for supporting the tag (106, 706, 806) and the tag is disposed on the support surface, wherein the support surface may at least partly be provided by a plurality of support surface portions (8102A, 8102B) spaced by one or more openings (8120), which plurality of support surface portions may be coplanar.

4. The tag assembly (100, 600, 700) according to any preceding claim, wherein the clamping members (1104, 1106, 7104, 7106, 8104, 8106) define in at least part of the interstitial space (S) a corrugating path for the support sheet (102, 602, 702) from an entrance of the interstitial space.

5. The tag assembly according to claim 4, comprising clamping portions for providing a locally elevated clamping force onto a support sheet, the clamping portions being arranged on a distal side of a corrugation providing at least part of the corrugating path from the entrance.

6. The tag assembly according to any preceding claim, wherein the spacer comprises at least one tubular portion extending along at least part of the tag, preferably along the length of the tag, and/or
wherein at least one of the clamping members has an overall corrugated shape along at least part of the tag, preferably along the length of the tag providing ribs defining at least part of a thickness of the spacer.

7. The tag assembly according to any preceding claim, wherein the spacer is substantially a polymer extrusion product, e.g. of polyamide or polyethene.

8. The tag assembly according to any preceding claim, wherein at least part of the spacer, in particular at least part of at least one of the clamping members has a wall having a wall thickness in a range of 0,1 - 2,0 mm, preferably in a range of 0,2 - 1,0 mm, such as in a range from 0,2 - 0,6 mm.

9. The tag assembly according to any preceding claim, wherein the tag comprises at least one metallic dipole antenna structure and wherein the spacer is located within the proximity of the antenna structure and/or at least partly on top of the dipole antenna structure, and/or
wherein the tag comprises a processor connected to a metallic thin-film antenna structure and the tag is disposed at least partly over the spacer.

10. The tag assembly according to any preceding claim, further comprising at least a dielectric layer disposed between the tag and the spacer, wherein the dielectric layer comprises a high-dielectric material and wherein the tag comprises a processor connected to at least one metallic thin-film antenna structure which is impedance matched to the processor taking into account the presence of the dielectric layer in the direct proximity of the antenna structure.

11. The tag assembly according to any preceding claim, the support sheet comprising a visual identifier on a first side, in particular a printed identifier, and wherein the spacer is attachable or attached to the support sheet, such that the tag is arranged on, or in front of, the first side, wherein the spacer preferably is arranged in part on or in front of the first side and in part on or behind a second side of the support sheet opposite the first side.

12. The bib tag assembly according to any preceding claim, wherein the spacer is removably attachable or removably attached to the support sheet together with the tag.

13. The tag assembly according to any preceding claim, wherein at least part of the spacer is formed as an (extruded) corrugated product, e.g. a corrugated sheet.

14. The tag assembly according to claim 13, wherein the corrugated product includes one or more elongated corrugations along a longitudinal axis of the spacer, wherein a cross-sectional depth of the elongated corrugations defines a spacing distance between the body of the athlete and the **UHF** tag and/or, wherein a first clamping member includes a first set of elongated corrugations and the second, opposite, clamping member includes a second set of elongated corrugations opposing the first set of elongated corrugations.

15. Use in sports timing of a spacer (110, 710, 810) attached to a support sheet (102, 602, 702), such as a bib, to be attached to a body or clothing of a wearer and preferably comprising a visual identifier, to provide a predetermined spacing between a dipole antenna of a tag (106, 706, 806) being configured to transmit a UHF signal (203) to a receiver (210),
wherein at least a portion of the spacer has a general U-shape having clamping members (1104, 1106, 7104, 7106, 8104, 8106) opposite each other providing an interstitial space (S, SA, SB) accommodating the support sheet (102, 602, 702) and clamping onto the support sheet.

## Patentansprüche

1. UHF-Sportzeitnahme-Startnummer-Tag-Baugruppe (100, 600, 700) umfassend:
ein Trägerblatt (102, 602, 702), wie eine Startnummer, zur Befestigung an einem Körper oder an Kleidung eines Trägers, vorzugsweise umfassend einen Identifikator,
ein Tag (106, 706, 806), das vom Trägerblatt getragen wird, wobei das Tag eine Dipolantenne (108) umfasst und konfiguriert ist, ein UHF-Signal (203) an einen Empfänger (210) zu senden,
**gekennzeichnet durch**
einen Abstandshalter (110, 710, 810), konfiguriert zur Befestigung an dem Trägerblatt und aufweisend oder definierend eine Dicke (T) zum Bereitstellen eines vorbestimmten Abstands zwischen der Antenne des Tags und einem Körper des Trägers entlang der Antenne,
wobei das Tag an dem Abstandshalter befestigt ist und
wobei wenigstens ein Abschnitt des Abstandshalters eine allgemeine U-Form mit einander gegenüberliegenden Klemmelementen (1104, 1106, 7104, 7106, 8104, 8106) aufweist, die einen Zwischenraum (S, SA, SB) zum Aufnehmen des Trägerblattes (102, 602, 702) bereitstellen und das Trägerblatt einklemmen.

2. Tag-Baugruppe (100, 600, 700) nach einem der vorhergehenden Ansprüche, wobei das Tag (106, 706, 806) länglich ist mit einer Länge (L) und einer Höhe (H) und wobei der Abstand entlang der Länge des Tags in einem Bereich von 2-15 mm liegt, insbesondere in einem Bereich von 4-8 mm, wie in einem Bereich von 5-6 mm; und/oder
wobei das Tag länglich ist mit einer Länge (L) und einer Höhe (H) und wobei der Abstandshalter an einer Position des Tags eine Dicke (T) aufweist oder definiert, in einem Bereich von 2-15 mm, insbesondere eine Dicke in einem Bereich von 4-8 mm, wie in einem Bereich von 5-6 mm entlang der Länge des Tags.

3. Tag-Baugruppe (100, 600, 700) nach einem der vorhergehenden Ansprüche, wobei wenigstens eines der Klemmelemente (1104, 1106, 7104, 7106, 8104, 8106) eine Stützfläche (1102, 1102A, 1102B, 8102) zum Tragen des Tags (106, 706, 806) bereitstellt und das Tag auf der Stützfläche angeordnet ist, wobei die Stützfläche zumindest teilweise durch eine Vielzahl von Stützflächenabschnitten (8102A, 8102B) bereitgestellt sein kann, die durch eine oder mehrere Öffnungen (8120) beabstandet sind, wobei die Vielzahl von Stützflächenabschnitten koplanar sein kann.

4. Tag-Baugruppe (100, 600, 700) nach einem der vorhergehenden Ansprüche, wobei die Klemmelemente (1104, 1106, 7104, 7106, 8104, 8106) in zumindest einem Teil des Zwischenraums (S) einen Wellenweg für das Trägerblatt (102, 602, 702) von einem Eingang des Zwischenraums definieren.

5. Tag-Baugruppe nach Anspruch 4, umfassend Klemmabschnitte zum Bereitstellen einer lokal erhöhten Klemmkraft auf ein Trägerblatt, wobei die Klemmabschnitte auf einer vom Eingang entfernten Seite einer Wellung angeordnet sind, die zumindest einen Teil des Wellenwegs bereitstellt.

6. Tag-Baugruppe nach einem der vorhergehenden Ansprüche, wobei der Abstandshalter wenigstens einen rohrförmigen Abschnitt umfasst, der sich entlang wenigstens eines Teils des Tags erstreckt, vorzugsweise entlang der Länge des Tags, und/oder
wobei wenigstens eines der Klemmelemente eine insgesamt gewellte Form entlang wenigstens eines Teils des Tags hat, vorzugsweise entlang der Länge des Tags, Rippen bereitstellend, die wenigstens einen Teil einer Dicke des Abstandshalters definieren.

7. Tag-Baugruppe nach einem der vorhergehenden Ansprüche, wobei der Abstandshalter im Wesentlichen ein Polymer-Extrusionsprodukt ist, z.B. aus Polyamid oder Polyethylen.

8. Tag-Baugruppe nach einem der vorhergehenden Ansprüche, wobei wenigstens ein Teil des Abstandshalters, insbesondere wenigstens ein Teil von wenigstens einem der Klemmelemente, eine Wand mit einer Wandstärke in einem Bereich von 0,1-2,0 mm aufweist, vorzugsweise in einem Bereich von 0,2-1,0 mm, wie in einem Bereich von 0,2-0,6 mm.

9. Tag-Baugruppe nach einem der vorhergehenden Ansprüche, wobei das Tag wenigstens eine metallische Dipolantennenstruktur umfasst und wobei der Abstandshalter in der Nähe der Antennenstruktur und/oder wenigstens teilweise auf der Dipolantennenstruktur angeordnet ist, und/oder
wobei das Tag einen Prozessor umfasst, der mit einer metallischen Dünnschichtantennenstruktur verbunden ist, und das Tag wenigstens teilweise über dem Abstandshalter angeordnet ist.

10. Tag-Baugruppe nach einem der vorhergehenden Ansprüche, weiterhin umfassend wenigstens eine dielektrische Schicht, die zwischen dem Tag und dem Abstandshalter angeordnet ist, wobei die dielektrische Schicht ein Hochdielektrikum umfasst und wobei das Tag einen Prozessor umfasst, der mit wenigstens einer metallischen Dünnschichtantennenstruktur verbunden ist, die auf den Prozessor hin impedanzangepasst ist, wobei die Anwesenheit der dielektrischen Schicht in unmittelbarer Nähe der Antennenstruktur berücksichtigt ist.

11. Tag-Baugruppe nach einem der vorhergehenden Ansprüche, wobei das Trägerblatt auf einer ersten Seite einen visuellen Identifikator aufweist, insbesondere einen gedruckten Identifikator, und wobei der Abstandshalter an dem Trägerblatt befestigbar oder befestigt ist, so dass das Tag auf oder vor der ersten Seite angeordnet ist, wobei der Abstandshalter vorzugsweise teilweise auf oder vor der ersten Seite und teilweise auf oder hinter einer zweiten, der ersten Seite gegenüberliegenden Seite des Trägerblatts angeordnet ist.

12. Startnummer-Tag-Baugruppe nach einem der vorhergehenden Ansprüche, wobei der Abstandshalter zusammen mit dem Tag lösbar an dem Trägerblatt befestigbar oder lösbar befestigt ist.

13. Tag-Baugruppe nach einem der vorhergehenden Ansprüche, wobei wenigstens ein Teil des Abstandshalters als (extrudiertes) gewelltes Produkt ausgebildet ist, z.B. ein gewelltes Blech.

14. Tag-Baugruppe nach Anspruch 13, wobei das gewellte Produkt eine oder mehrere längliche Wellen entlang einer Längsachse des Abstandshalters umfasst, wobei eine Querschnittstiefe der länglichen Wellen einen Abstand zwischen dem Körper des Athleten und dem UHF-Tag definiert und/oder, wobei ein erstes Klemmelement einen ersten Satz länglicher Wellen umfasst und das zweite, gegenüberliegende Klemmelement einen zweiten Satz länglicher Wellen umfasst, die dem ersten Satz länglicher Wellen gegenüberliegen.

15. Verwendung in der Sportzeitnahme eines Abstandshalters (110, 710, 810), der an einem Trägerblatt (102, 602, 702), wie einer Startnummer, befestigt ist, um an einem Körper oder an Kleidung eines Trägers befestigt zu werden und vorzugsweise einen visuellen Identifikator umfassend, zum Bereitstellen eines vorbestimmten Abstands zwischen einer Dipolantenne eines Tags (106, 706, 806), das konfiguriert ist, ein UHF-Signal (203) an einen Empfänger (210) zu senden,
wobei wenigstens ein Abschnitt des Abstandshalters eine allgemeine U-Form mit einander gegenüberliegenden Klemmelementen (1104, 1106, 7104, 7106, 8104, 8106) aufweist, die einen Zwischenraum (S, SA, SB) bereitstellen, der das Trägerblatt (102, 602, 702) aufnimmt, und das Trägerblatt einklemmen.

## Revendications

1. Ensemble étiquette de dossard de chronométrage sportif UHF (100, 600, 700) comprenant :
une feuille de support (102, 602, 702), telle qu'un dossard, à fixer à un corps ou à un vêtement d'un porteur, comprenant de préférence un identifiant,
une étiquette (106, 706, 806) destinée à être supportée par la feuille de support, l'étiquette comprenant une antenne dipôle (108) et étant configurée pour transmettre un signal UHF (203) à un récepteur (210), **caractérisé par** un intercalaire (110, 710, 810) configuré pour être fixé à la feuille de support et présentant ou définissant une épaisseur (T) pour fournir un espacement prédéterminé entre l'antenne de l'étiquette et un corps du porteur le long de l'antenne,
dans lequel l'étiquette est fixée à l'intercalaire et
dans lequel au moins une partie de l'intercalaire présente une forme générale en U présentant des organes de serrage (1104, 1106, 7104, 7106, 8104, 8106) opposés les uns aux autres fournissant un espace interstitiel (S, SA, SB) pour accueillir la feuille de support (102, 602, 702) et serrer sur la feuille de support.

2. Ensemble étiquette (100, 600, 700) selon l'une quelconque des revendications précédentes, dans lequel l'étiquette (106, 706, 806) est allongée présentant une longueur (L) et une hauteur (H) et dans lequel l'espacement le long de la longueur de l'étiquette est dans une plage de 2 à 15 mm, en particulier dans une plage de 4 à 8 mm, tel que dans une plage de 5 à 6 mm ; et/ou dans lequel l'étiquette est allongée présentant une longueur (L) et une hauteur (H) et dans lequel l'intercalaire présente ou définit une épaisseur (T) dans une plage de 2 à 15 mm à une position de l'étiquette, en particulier une épaisseur dans une plage de 4 à 8 mm, telle que dans une plage de 5 à 6 mm le long de la longueur de l'étiquette.

3. Ensemble étiquette (100, 600, 700) selon l'une quelconque des revendications précédentes, dans lequel au moins l'un des organes de serrage (1104, 1106, 7104, 7106, 8104, 8106) fournit une surface de support (1102, 1102A, 1102B, 8102) pour supporter l'étiquette (106, 706, 806) et l'étiquette est disposée sur la surface de support, dans lequel la surface de support peut être fournie au moins en partie par une pluralité de parties de surface de support (8102A, 8102B) espacées par une ou plusieurs ouvertures (8120), laquelle pluralité de parties de surface de support pouvant être coplanaire.

4. Ensemble étiquette (100, 600, 700) selon l'une quelconque des revendications précédentes, dans lequel les organes de serrage (1104, 1106, 7104, 7106, 8104, 8106) définissent, dans au moins une partie de l'espace interstitiel (S), un chemin ondulé pour la feuille de support (102, 602, 702) à partir d'une entrée de l'espace interstitiel.

5. Ensemble étiquette selon la revendication 4, comprenant des parties de serrage pour fournir une force de serrage localement élevée sur une feuille de support, les parties de serrage étant agencées sur un côté distal d'une ondulation fournissant au moins une partie du chemin ondulé à partir de l'entrée.

6. Ensemble étiquette selon l'une quelconque des revendications précédentes, dans lequel l'intercalaire comprend au moins une partie tubulaire s'étendant le long d'au moins une partie de l'étiquette, de préférence le long de la longueur de l'étiquette, et/ou dans lequel au moins l'un des organes de serrage présente une forme globale ondulée le long d'au moins une partie de l'étiquette, de préférence le long de la longueur de l'étiquette fournissant des nervures définissant au moins une partie d'une épaisseur de l'intercalaire.

7. Ensemble étiquette selon l'une quelconque des revendications précédentes, dans lequel l'intercalaire est sensiblement un produit d'extrusion polymère, par exemple en polyamide ou en polyéthylène.

8. Ensemble étiquette selon l'une quelconque des revendications précédentes, dans lequel au moins une partie de l'intercalaire, en particulier au moins une partie d'au moins un des organes de serrage présente une paroi présentant une épaisseur de paroi dans une plage de 0,1 à 2,0 mm, de préférence dans une plage de 0,2 à 1,0 mm, telle que dans une plage de 0,2 à 0,6 mm.

9. Ensemble étiquette selon l'une quelconque des revendications précédentes, dans lequel l'étiquette comprend au moins une structure d'antenne dipôle métallique et dans lequel l'intercalaire est situé à proximité de la structure d'antenne et/ou au moins en partie au-dessus de la structure d'antenne dipôle, et/ou dans lequel l'étiquette comprend un processeur connecté à une structure d'antenne à couche mince métallique et l'étiquette est disposée au moins en partie sur l'intercalaire.

10. Ensemble étiquette selon l'une quelconque des revendications précédentes, comprenant en outre au moins une couche diélectrique disposée entre l'étiquette et l'intercalaire, dans lequel la couche diélectrique comprend un matériau hautement diélectrique et dans lequel l'étiquette comprend un processeur connecté à au moins une structure d'antenne à couche mince métallique dont l'impédance est adaptée au processeur en tenant compte de la présence de la couche diélectrique à proximité directe de la structure d'antenne.

11. Ensemble étiquette selon l'une quelconque des revendications précédentes, la feuille de support comprenant un identifiant visuel sur un premier côté face, en particulier un identifiant imprimé, et dans lequel l'intercalaire peut être fixé ou est fixé à la feuille de support, de sorte que l'étiquette soit agencée sur, ou devant, le premier côté, dans lequel l'intercalaire est de préférence agencé en partie sur, ou devant, le premier côté et en partie sur, ou derrière, un second côté de la feuille de support opposé au premier côté.

12. Ensemble étiquette de dossard selon l'une quelconque des revendications précédentes, dans lequel l'intercalaire peut être fixé de manière amovible ou est fixé de manière amovible à la feuille de support avec l'étiquette.

13. Ensemble étiquette selon l'une quelconque des revendications précédentes, dans lequel au moins une partie de l'intercalaire est formée sous forme de produit ondulé (extrudé), par exemple une feuille ondulée.

14. Ensemble étiquette selon la revendication 13, dans lequel le produit ondulé inclut une ou plusieurs ondulations allongées selon un axe longitudinal de l'intercalaire, dans lequel une profondeur en coupe transversale des ondulations allongées définit une distance d'espacement entre le corps de l'athlète et l'étiquette UHF, et/ou dans lequel un premier organe de serrage inclut un premier ensemble d'ondulations allongées et le second organe de serrage allongé inclut un second ensemble d'ondulations allongées opposé au premier ensemble d'ondulations allongées.

15. Utilisation, en chronométrage sportif, d'un intercalaire (110, 710, 810) fixé à une feuille de support (102, 602, 702), telle qu'un dossard, à fixer à un corps ou à un vêtement d'un porteur et comprenant de préférence un identifiant visuel, pour fournir un espacement prédéterminé entre une antenne dipôle d'une étiquette (106, 706, 806) étant configurée pour transmettre un signal UHF (203) à un récepteur (210), dans laquelle au moins une partie de l'intercalaire présente une forme générale en U présentant des organes de serrage (1104, 1106, 7104, 7106, 8104, 8106) opposés les uns aux autres fournissant un espace interstitiel (S, SA, SB) recevant la feuille de support (102, 602, 702) et serrant sur la feuille de support.
